# FASCICULE DE BREVET EUROPEEN

(11) **EP 2 065 743 B1**
(45) Date de publication et mention de la délivrance du brevet: **12.01.2011**
(21) Numéro de dépôt: 08169792.2
(22) Date de dépôt: 24.11.2008
(51) Int. Cl.: G02B 13/00, G02B 27/00, G02B 5/20, G03F 7/00, G02F 1/01, H04N 5/30, H04N 9/04

(54) **Dispositif d'imagerie visible à filtre coloré**
Bildgebungsvorrichtung mit Farbfilter
Visible imaging device with colour filter

(30) Priorité: 27.11.2007 FR 0759346
(43) Date de publication de la demande: 03.06.2009
(73) Titulaire: Commissariat à l'Énergie Atomique et aux Énergies Alternatives, 75015 Paris (FR)
(72) Inventeur: GIDON, Serge, 38140, LA MURETTE (FR)
(74) Mandataire: Ilgart, Jean-Christophe

(56) Documents cités:
- EP-A- 0 814 618
- DE-A1- 2 741 467
- GB-A- 2 092 330
- GB-A- 2 123 238
- US-A1- 2006 092 524
- US-B1- 6 464 359

## Description

### DOMAINE TECHNIQUE

L'invention concerne un dispositif d'imagerie visible à filtre coloré.

### ETAT DE LA TECHNIQUE ANTERIEURE

Le domaine des dispositifs d'imagerie visible est en pleine expansion. Ainsi, de nombreux téléphones portables multi-usages ayant une fonction d'appareil photographique, voire de caméra, sont mis, aujourd'hui, sur le marché. Ce domaine est un domaine très concurrentiel, qui impose une baisse des coûts de fabrication. De plus, les dispositifs d'imagerie deviennent de plus en plus petits, les processus de fabrication permettant de réaliser plus de capteurs par tranches de silicium. De plus en plus de pixels (ou éléments d'image) sont ainsi prévus pour chaque capteur. Un pixel correspond à un motif de base incluant la zone sensible et les espaces réservés aux interconnexions ou circuits électroniques. Des dispositifs d'imagerie de plus de 3 millions de pixels (2 000 x 1 500 pixels) existent usuellement. La dimension d'un pixel est alors de l'ordre de 2 µm, et est appelée à atteindre 1 µm.

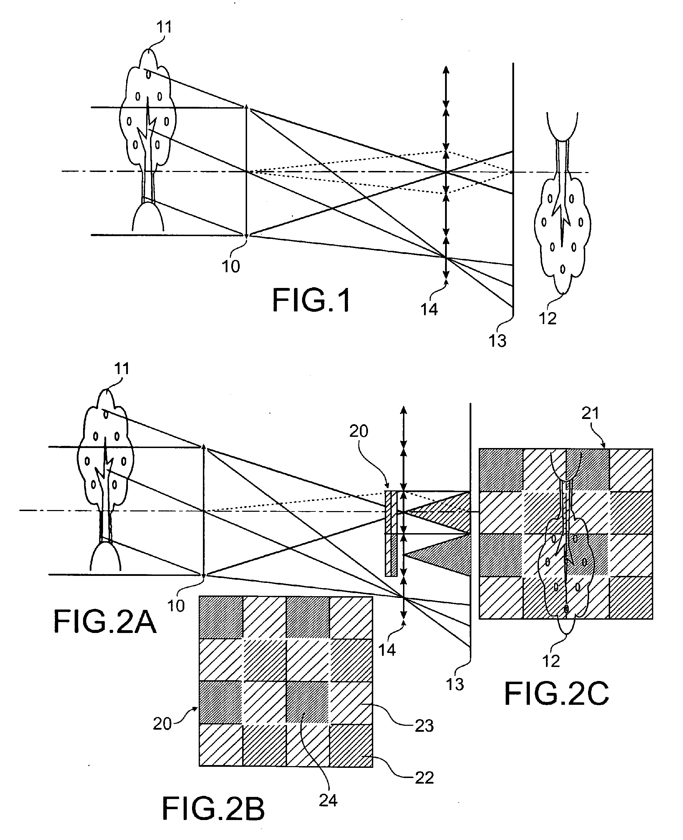

La réalisation d'un capteur d'image de téléphone portable, comme illustré sur la figure 1, repose sur l'assemblage d'une optique principale de courte focale 10 munie d'une pupille, par exemple une focale de quelques millimètres, comme décrit dans le document référencé [1] en fin de description, formant l'image 12 d'une scène 11 sur le plan du détecteur d'image 13, qui est formé d'un réseau de pixels, chaque pixel correspondant à un sous-élément sensible du détecteur. Cette optique principale 10 peut intégrer un filtre infra-rouge (IR), non illustré sur la figure, qui évite d'éblouir le capteur d'image, sensible aux infra-rouges, avec des rayonnements qui ne correspondent pas à la perception de l'oeil humain.

Un tel détecteur est réalisé en micro électronique, ce qui permet la juxtaposition de pixels élémentaires qui sont lus à tour de rôle par un circuit d'adressage intégré, comme décrit dans le document référencé [2]. Ce circuit comporte des transistors réalisés dans le silicium (« front end »), des liaisons électriques nécessaires aux interconnexions et une fonction d'adressage placées le plus souvent au-dessus du silicium (« back end »). La proximité de ces conducteurs métalliques des zones sensibles du détecteur conduit à des phénomènes de diffraction que l'on limite au moyen d'un réseau de microlentilles 14, qui servent à (re)focaliser les rayons issus de l'optique principale 10 sur le plan du détecteur 13. Ces microlentilles 14 réalisent une conjugaison optique entre la pupille de l'optique principale 10 et la zone de détection de chaque pixel. Le nombre de microlentilles 14 est le même que celui de pixels sensibles, avec un pas sensiblement égal à celui des pixels, ce pas pouvant toutefois être adapté afin de tenir compte de l'inclinaison des rayons en bord de champ. L'ouverture numérique de l'optique principale 10, qui est théoriquement lié au pas des pixels (ou celui des microlentilles) et leur focale, est typiquement de l'ordre de 0.3.

Le réseau de microlentilles 14 est réalisé de manière intégrée sur le détecteur, afin, d'une part, de garantir les alignements nécessaires et, d'autre part, d'avoir des microlentilles de la plus petite distance focale possible pour augmenter leur ouverture numérique (diamètre/focale) afin de limiter les effets de diffraction. En pratique, cette distance focale est imposée par les choix technologiques et les épaisseurs des métallisations, qui sont typiquement de 2 µm.

Les pixels peuvent être associés par exemple par blocs de quatre, et pourvus d'un motif de filtre coloré trichrome (RVB ou Rouge-Vert-Bleu) 20 afin de percevoir les couleurs, ces motifs sélectionnant des domaines complémentaires du spectre visible. Une telle structure à filtre coloré périodique, dont la plus connue sous la dénomination de « filtre de Bayer », est généralement intégrée au plus près des pixels sur ou sous les microlentilles, comme illustré sur la figure 2A. Elle est alors réalisée par des dépôts successifs de matériaux organiques colorés définis par tous procédés connus de la microélectronique, typiquement par photolithogravure.

La figure 2B illustre une telle structure de filtre coloré 20 de type « filtre de Bayer » avec trois couleurs: rouge 22, vert 23 et bleu 24. La figure 2C illustre les images filtrées 21 de la pupille de l'optique principale 10 obtenues dans le plan du détecteur 13.

La réduction de la taille des pixels pose un problème d'optique et un problème d'intégration:
- Le problème d'optique est inhérent au phénomène de diffraction qui apparaît lorsque la taille des éléments optiques approche celle de la longueur d'onde. On ne peut plus considérer les rayons lumineux comme se propageant en ligne droite. Il faut tenir compte de la nature ondulatoire de la lumière qui induit une convolution des images par la diffraction. Ainsi les microlentilles, du fait de la réduction de leur taille, ne forment plus à proprement parler des images de la pupille de l'optique principale sur le plan du détecteur, mais plutôt des taches lumineuses avec des lobes de diffraction qui ne peuvent être superposés précisément aux zones de détection.
- Le problème d'intégration réside dans la difficulté de fabrication d'un « filtre de Bayer » due à la nécessité de réaliser des motifs lithographiques de plus en plus précis pour juxtaposer les différents matériaux constitutifs de ce filtre. Ainsi, la fabrication de tels filtres peut être effectuée en utilisant une technique de jet d'encre, décrite dans le document référencé [3]. Ce document décrit, en effet, un procédé de fabrication d'un filtre coloré comportant des pellicules d'encre dans des ouvertures enfermées et délimitées par des bancs formés sur un substrat comportant une première étape pour former une pellicule métallique sur le substrat ; une deuxième étape pour former les bancs en formant une pellicule organique photosensible mince sur la pellicule métallique ; et une troisième étape pour former les pellicules d'encre en emplissant les ouvertures d'encre.

L'invention a pour objet de pallier les inconvénients des dispositifs de l'art connu en proposant un dispositif d'imagerie visible à filtre coloré qui permette de dissocier le problème de réalisation du filtre coloré du problème de réalisation du détecteur en évitant de disposer le filtre coloré sur chaque groupe de pixels et en conservant une dimension raisonnable aux microlentilles pour limiter les phénomènes de diffraction.

Le document GB-A-2 092 330 divulgue un dispositif d'imagerie photographique comprenant un réseau de micro lentilles et plusieurs filtres colorés.

### EXPOSÉ DE L'INVENTION

La présente invention concerne un dispositif d'imagerie visible à filtre coloré comprenant:
- une optique principale munie d'une pupille,
- un détecteur formant un réseau de pixels sensibles,
- un circuit d'adressage de ces pixels,
- un réseau de microlentilles réalisant la conjugaison optique entre la pupille de l'optique principale et un groupe de pixels du détecteur,
- un filtre coloré,
caractérisé en ce que le filtre coloré est disposé dans le voisinage de la pupille de l'optique principale et en ce que le pas des microlentilles est double de celui des pixels.

Avantageusement, dans une variante de réalisation, le filtre coloré peut alors avoir une structure de pas double par rapport à la structure d'un filtre à quatre zones.

Avantageusement, dans le détecteur, les métallisations passent autour de groupes de quatre pixels.

Lorsque la pupille a une forme circulaire, les zones sensibles du détecteur ont avantageusement la forme de quarts de disque.

Avantageusement, l'optique principale comprend un filtre infra-rouge et/ou OLPF (optical low pass filter), sur lequel est réalisé la structure de filtre coloré.

Avantageusement, le filtre coloré peut également être disposé sur une surface courbe de l'optique principale.

### BRÈVE DESCRIPTION DES DESSINS

La figure 1 illustre le principe d'un dispositif d'imagerie visible à microlentilles de refocalisation de l'art connu.
Les figures 2A à 2C illustrent un dispositif d'imagerie visible à filtre coloré de l'art connu.
Les figures 3A à 3C illustrent le dispositif d'imagerie visible de l'invention avec une structure à filtre coloré simple.
Les figures 4A à 4C illustrent le dispositif d'imagerie visible de l'invention avec un sur-échantillonnage du filtre coloré en entrée.
Les figures 5A à 5C illustrent le dispositif d'imagerie visible de l'invention avec une optimisation de la zone éclairée, en utilisant des microlentilles de courte focale.
La figure 6 illustre les zones sensibles du détecteur du dispositif de l'invention, en tenant compte d'une pupille de l'optique principale de forme circulaire.

### EXPOSÉ DÉTAILLÉ DE MODES DE RÉALISATION PARTICULIERS

Dans la suite, les éléments déjà décrits dans les dispositifs d'imagerie de l'art connu tels qu'illustrés sur les figures 1 et 2 gardent les mêmes références. On conserve ainsi les références 22, 23 et 24 pour les couleurs rouge, vert et bleu.

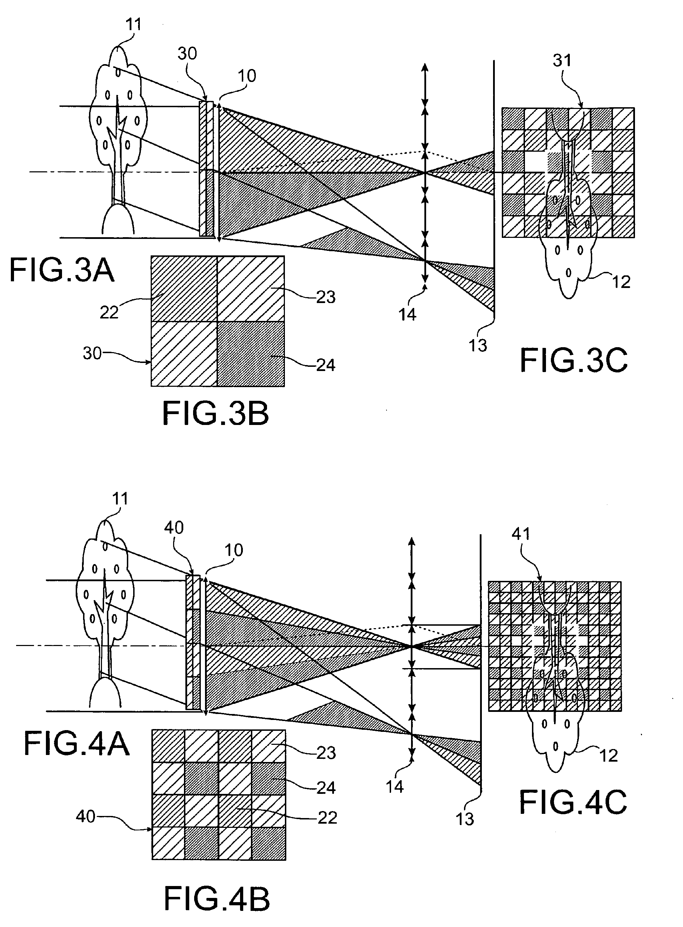

Dans le dispositif d'imagerie visible de l'invention, illustré sur la figure 3A, on dispose le filtre coloré 30 dans le voisinage de la pupille de l'optique principale 10. Le réseau de microlentilles 14 peut alors avoir ainsi avantageusement un pas double de celui du réseau de pixels du détecteur 13. Les microlentilles 14, qui forment l'image 31 de la pupille de l'optique principale 10 sur le plan du détecteur 13, réalisent autant de sous-images du filtre coloré sur ce plan. Ces microlentilles réalisent ainsi la conjugaison optique entre la pupille de l'optique principale et un groupe de pixels du détecteur 13. Le pas double est choisi en tenant compte des motifs du filtre coloré 30. La structure de ce filtre coloré 30 peut être par exemple la structure de base d'un filtre de Bayer à quatre zones.
La figure 3B illustre une telle structure de filtre coloré 30.
La figure 3C illustre l'image filtrée 31 de la pupille de l'optique principale 10 dans le plan du détecteur 13.

Le dispositif de l'invention est avantageux pour des raisons:
- conceptuelle: le fait d'avoir un pas double de celui des pixels, pour les microlentilles, permet de doubler la résolution sans augmenter les effets de diffraction inhérents à la taille des microlentilles, et
- pratique: les microlentilles 14 sont plus grosses, donc, a priori, plus faciles à maîtriser, de plus le filtre coloré 30, qui ne nécessite que d'être rapporté dans le voisinage de la pupille de l'optique principale 10, est de structure simple.

Dans une variante de réalisation du dispositif de l'invention, illustrée sur les figures 4A, 4B et 4C, qui correspondent respectivement aux figures 3A, 3B et 3C précédentes, on utilise une structure de filtre coloré 40, dans laquelle, par rapport à la structure de filtre coloré 30, on a augmenté le nombre de motifs, ce qui permet de réduire d'autant le pas des microlentilles 14 pour obtenir une image 41 dans le plan du détecteur 13.

Mais, une telle approche ne semble pas envisageable pratiquement au-delà d'un pas double par rapport à la structure de base de la figure 3B. En effet, il faut pouvoir atteindre les zones sensibles par un de leurs bords, au moyen des pistes de métallisations qui ne peuvent passer dans les faisceaux. Ceci est vérifié lorsque les microlentilles 14 sont suffisamment grandes (cas du pas double), dans la mesure où l'image 41 du filtre coloré 40 est peu entachée par la diffraction et où l'on peut localiser convenablement le flux incident sur chaque pixel.

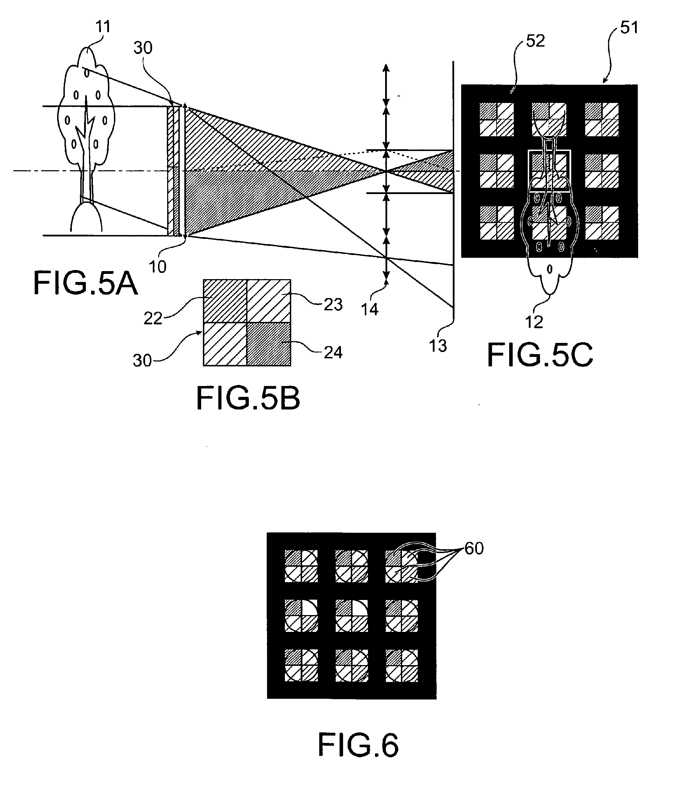

Il est alors avantageux de faire « passer » les métallisations « autour » de chaque groupe de quatre pixels, dans les zones « obscures » 52 de l'image 51 du filtre, comme illustré sur la figure 5C, les figures 5A et 5B correspondant respectivement aux figures 3A(4A) et 3B(4B).

La pupille de l'optique principale 10 est généralement de forme circulaire, ce qui induit des images du filtre coloré ayant la forme de disques. Les zones sensibles 60 du détecteur peuvent alors avantageusement avoir la forme de quarts de disque, comme illustré sur la figure 6.

### Exemple de réalisation

La structure de filtre coloré peut être réalisée sur ou à proximité d'un filtre IR (Infra-Rouge) ou OLPF (« Optical Low Pass Filter ») par exemple décrit dans le document référencé [1], utilisé pour faire disparaître les effet de moirés dus à la discrétisation par pixels, ce filtre étant disposé à proximité de l'optique principale 10, avantageusement dans l'optique principale 10.

Le filtre coloré peut être obtenu par tout procédé connu de l'optique classique, par exemple par dépôts de matériaux organiques colorés, au moyen d'un pochoir, sur une lame transparente de surface optiquement plane. Il peut aussi être réalisé par des dépôts localisés de multiples couches optiques fonctionnant par interférences lumineuses.

Dans les deux cas, le filtre coloré est réalisé par un procédé collectif, en partant d'un substrat de grande taille (à la base) un filtre IR ou OLPF) sur lequel est déposé de la résine photo lithographique qui est insolée une fois au travers d'un masque (procédé classique de la lithographie) et développée, ce qui laisse seulement apparaître comme démasquées les zones devant recevoir l'un des matériaux colorés absorbant ou l'empilement de couches absorbantes.

Les matériaux organiques colorés peuvent être déposés par « dipping », technique qui consiste à immerger les substrats dans une solution du matériau organique avec un solvant qui s'évapore après avoir retiré le substrat du liquide. Ces matériaux organiques peuvent aussi être déposés à la tournette comme réalisé classiquement en micro électronique.

Les multicouches diélectriques, pouvant inclurent des couches métalliques, sont réalisés habituellement par PVD (« Plasma Vapor Deposition »).

On retire ensuite la résine restante après cette étape de dépôt (technique « lift off »), afin de libérer les zones du substrat devant recevoir les prochains filtres.

Le processus est ainsi recommencé autant de fois que nécessaire, c'est-à-dire trois fois dans le cas d'un filtre de Bayer RVB simple.

La structure de filtre coloré peut également être disposée sur une surface courbe de l'optique principale dans l'hypothèse où celle-ci n'est pas loin de la position de la pupille.

Le réseau de microlentilles peut être formé d'un réseau d'un millier de microlentilles par un millier de microlentilles avec un pas de 1 µm.

### REFERENCES

[1] « Optical low pass filter theory and practice » (application note, Sunex, "optics-online.com/doc/files".
[2] "CMOS Image Sensors" de Abbas el Gamal et Helmy Eltoukhy (IEEE Circuits & Devices Magazine, Mai/Juin 2005.
[3] US 7,070,890.

## Revendications

1. Dispositif d'imagerie visible à filtre coloré comprenant:
- une optique principale (10) munie d'une pupille,
- un détecteur (13) formant un réseau de pixels sensibles,
- un circuit d'adressage de ces pixels,
- un réseau de microlentilles (14) réalisant la conjugaison optique entre la pupille de l'optique principale (10) et un groupe de pixels du détecteur,
- un filtre coloré (30 ; 40),
**caractérisé en ce que** le filtre coloré (30 ; 40) est disposé dans le voisinage de la pupille de l'optique principale et **en ce que** le pas des microlentilles (14) est double de celui des pixels.

2. Dispositif selon la revendication 1, dans lequel le filtre coloré (30) à la structure d'un filtre de Bayer à quatre zones.

3. Dispositif selon la revendication 1, dans lequel le filtre coloré (40) à une structure de pas double par rapport à la structure d'un filtre de Bayer à quatre zones.

4. Dispositif selon la revendication 1, dans lequel, dans le détecteur, les métallisations passent autour des groupes de quatre pixels.

5. Dispositif selon la revendication 1, dans lequel la pupille a une forme circulaire, et les zones sensibles (60) du détecteur ont la forme de quarts de disque.

6. Dispositif selon la revendication 1, dans lequel l'optique principale comprend un filtre infra-rouge ou OLPF sur lequel est disposé le filtre coloré.

7. Dispositif selon la revendication 1, dans lequel le filtre coloré est disposé sur une surface courbe de l'optique principale (10).

## Claims

1. Visible imaging device with a colour filter, including:
- main optics (10) equipped with a pupil,
- a sensor (13) forming a sensitive pixel array,
- a circuit for addressing said pixels,
- a microlens array (14) producing the optical conjugation between the pupil of the main optics (10) and a group of pixels of the sensor,
- a colour filter (30, 40),
**characterised in that** the colour filter (30, 40) is arranged in the vicinity of the pupil of the main optics and **in that** the pitch of the microlenses (14) is twice that of the pixels.

2. Device according to claim 1, wherein the colour filter (30) has a Bayer filter structure with four zones.

3. Device according to claim 1, wherein the colour filter (40) has a structure with twice the pitch of the structure of a Bayer filter with four zones.

4. Device according to claim 1, wherein, in the sensor, the metallizations pass around groups of four pixels.

5. Device according to claim 1, wherein the pupil has a circular shape, and the sensitive zones (60) of the sensor have the shape of disk quadrants.

6. Device according to claim 1, wherein the main optics include an infrared filter or an OLPF on which the colour filter structure is produced.

7. Device according to claim 1, wherein the colour filter is arranged on a curved surface of the main optics (10).

## Patentansprüche

1. Vorrichtung zum Herstellen eines sichtbaren Bilds mit gefärbtem Filter, Folgendes aufweisend:
- eine Hauptoptik (10), die mit einer Pupille versehen ist,
- einen Detektor (13), der ein Netz aus empfindlichen Pixeln bildet,
- eine Adressierschaltung für diese Pixel,
- ein Mikrolinsennetz (14), das die optische Konjugation zwischen der Pupille der Hauptoptik (10) und einer Gruppe von Pixeln des Detektors ausführt,
- ein gefärbtes Filter (30; 40),
**dadurch gekennzeichnet, dass** das gefärbte Filter (30; 40) in der Nähe der Pupille der Hauptoptik angeordnet ist, und dass die Maschenweite der Mikrolinse (14) doppelt so groß ist wie die der Pixel.

2. Vorrichtung nach Anspruch 1, bei der das gefärbte Filter (30) die Struktur eines Bayer-Filters mit vier Bereichen hat.

3. Vorrichtung nach Anspruch 1, bei der das gefärbte Filter (40) eine Struktur mit doppelter Maschenweite im Vergleich zu der Struktur eines Bayer-Filters mit vier Bereichen hat.

4. Vorrichtung nach Anspruch 1, bei der, in dem Detektor, die Metallisierungen um Gruppen zu vier Pixeln laufen.

5. Vorrichtung nach Anspruch 1, bei der die Pupille eine kreisförmige Form hat, und bei der die empfindlichen Bereiche (60) des Detektors die Form von Viertelscheiben haben.

6. Vorrichtung nach Anspruch 1, bei der die Hauptoptik ein Infrarotfilter oder OLPF aufweist, auf dem das gefärbte Filter angeordnet ist.

7. Vorrichtung nach Anspruch 1, bei dem das gefärbte Filter auf einer gewölbten Fläche der Hauptoptik (10) angeordnet ist.
